# FASCICULE DE BREVET EUROPEEN

(11) **EP 2 823 206 B1**
(45) Date de publication et mention de la délivrance du brevet: **01.06.2016**
(21) Numéro de dépôt: 13707650.1
(22) Date de dépôt: 06.03.2013
(51) Int. Cl.: F16L 11/08, G01M 11/08, C08J 5/04, B32B 1/08

(54) **ELÉMENT D'ARMURE POUR UNE LIGNE FLEXIBLE DESTINÉE À ÊTRE PLACÉE DANS UNE ÉTENDUE D'EAU, LIGNE FLEXIBLE, MÉTHODE ET PROCÉDÉ ASSOCIÉ**
ARMIERUNGSELEMENT FÜR EINE FLEXIBELE LEITUNG DIE DAZU BSTIMMT IST, IN EINE WASSERFLÄCHE GESTELLT ZU WERDEN, FLEXIBELE LEITUNG, UND EINE ENTSPRECHENDE METHODE UND EIN ENTSPRECHENDES VERFAHREN
ARMOUR ELEMENT FOR A FLEXIBLE LINE INTENDED TO BE PLACED IN A STRETCH OF WATER, FLEXIBLE LINE, AND CORRESPONDING METHOD AND PROCESS

(30) Priorité: 06.03.2012 FR 1252036
(43) Date de publication de la demande: 14.01.2015
(73) Titulaire: Technip France, 92400 Courbevoie (FR)
(72) Inventeur: DO, An Tuan, F-95240 Cormeilles en Parisis (FR)
(74) Mandataire: Blot, Philippe Robert Emile
(86) Numéro de dépôt international: PCT/EP2013/054530
(87) Numéro de publication internationale: WO 2013/131972

(56) Documents cités:
- WO-A1-99/49259
- WO-A2-02/088659
- WO-A2-2006/102259
- FR-A1- 2 274 052
- FR-A1- 2 926 347
- ANDERSEN M ET AL: "DEVELOPMENT OF AN OPTICAL MONITORING SYSTEM FOR FLEXIBLE RISERS", ANNUAL OFFSHORE TECHNOLOGY CONFERENCE, XX, XX, 1 mai 2001 (2001-05-01), pages 249-255, XP008015969,
- KUANG K S C ET AL: "An evaluation of a novel plastic optical fibre sensor for axial strain and bend measurements; An evaluation of a novel plastic optical fibre sensor for axial strain and bend measurements", MEASUREMENT SCIENCE AND TECHNOLOGY, IOP, BRISTOL, GB, vol. 13, no. 10, 1 octobre 2002 (2002-10-01), pages 1523-1534, XP020063616, ISSN: 0957-0233, DOI: 10.1088/0957-0233/13/10/303
- JEROEN REMERY ET AL: "The Free Standing Flexible Riser: A Novel Riser System for an Optimised Installation Process", OFFSHORE TECHNOLOGY CONFERENCE,, 5 mai 2008 (2008-05-05), pages 1-11, XP007918877,

## Description

La présente invention concerne un élément d'armure pour une ligne flexible destinée à être placée dans une étendue d'eau selon le préambule de la revendication 1.

La ligne flexible est avantageusement une conduite flexible telle que décrite dans les documents normatifs publiés par l'American Petroleum Institute (API), API 17J et API RP 17B, bien connus de l'homme du métier.

Cette définition englobe indifféremment les conduites flexibles de type non lié (« unbonded » en anglais) ou du type lié (« bonded » en anglais).

Plus généralement, la conduite flexible peut être un faisceau composite de type « bundle » comprenant au moins un tube de transport de fluide et un ensemble de liens électriques, hydrauliques ou optiques propres à transporter une puissance électrique ou hydraulique, ou une information, entre le fond et la surface de l'étendue d'eau.

Dans encore une autre variante, la ligne flexible est un ombilical comprenant un ensemble de lignes électriques et/ou optiques et/ou hydrauliques propres à transporter une information, une puissance électrique ou une puissance hydraulique.

De telles lignes flexibles sont utilisées notamment en mer profonde dans l'industrie pétrolière, et s'étendent fréquemment à travers une étendue d'eau entre une installation de surface et un ensemble de fond. Ces lignes flexibles peuvent également s'étendre au fond de l'étendue d'eau entre des installations de fond.

Pour utiliser les lignes flexibles dans ce type d'applications, il est nécessaire de les renforcer compte tenu des efforts et des pressions appliquées sur la ligne. A cet effet, les conduites flexibles comportent généralement, de l'intérieur vers l'extérieur, une carcasse métallique, pour reprendre les efforts radiaux d'écrasement, une gaine interne d'étanchéité en polymère, pour contenir le fluide transporté, une voûte de pression, pour résister à la pression interne du fluide transporté dans la gaine interne, et des nappes d'armures équilibrées pour reprendre les efforts de tension axiale.

La conduite comprend généralement une gaine externe en polymère pour protéger l'ensemble de la conduite et notamment pour empêcher l'eau de pénétrer dans son épaisseur.

La carcasse interne et la voûte de pression sont généralement constituées d'éléments longitudinaux enroulés, suivant un pas court. Elles confèrent à la conduite sa résistance aux efforts radiaux.

Les nappes d'armures sont souvent constituées de profils métalliques enroulés selon des pas longs, pour reprendre les efforts axiaux.

Les nappes d'armures métalliques présentent le désavantage d'être sensibles à la corrosion, et de présenter un poids élevé.

Pour pallier ce problème, la demande de brevet de WO 99/49259 de la Demanderesse décrit des armures composites, réalisées à base de fibres de carbone.

Les armures sont formées à base d'éléments d'armures du type précité, comprenant une matrice plastique en forme de ruban et des filaments longitudinaux de fibres de carbone, de préférence organisés sous forme de mèches, qui sont noyées dans la matrice.

Un tel ruban présente des caractéristiques mécaniques très satisfaisantes, compte tenu de la haute ténacité et de la grande inertie chimique des fibres de carbone. De plus, le coût des fibres de carbone est relativement faible par rapport à celui d'autres fibres.

De telles armures sont généralement très robustes et permettent à la ligne flexible d'être disposée dans l'étendue d'eau pendant des périodes de temps très longues.

Cependant, dans certains cas, il peut être souhaitable de vérifier que la ligne flexible conserve son intégrité, notamment juste après son installation, et lors de son utilisation.

FR 2 926 347 décrit un élément d'armure selon le préambule de la revendication 1. WO 02/088659 décrit une armure métallique recevant une fibre optique dans une gorge longitudinale.

Un but de l'invention est donc de disposer d'un élément d'armure qui présente une structure légère et extrêmement robuste, et qui puisse être placée sur dans une ligne flexible dont l'intégrité peut être mesurée au cours du temps.

A cet effet, l'invention a pour objet un élément d'armure selon la revendication 1.

L'élément d'armure selon l'invention peut comprendre l'une ou plusieurs des caractéristiques des revendications 2 à 9, prises isolément ou suivant toutes combinaisons techniquement possibles.

L'invention a également pour objet une ligne flexible selon la revendication 10.

La ligne selon l'invention peut comprendre l'une ou plusieurs des caractéristiques des revendications 11 et 12, prise(s) isolément ou suivant toutes combinaisons techniquement possibles.

L'invention a également pour objet une méthode de contrôle. selon la revendication 13

L'invention a également pour objet un procédé de fabrication selon la revendication 14.

Le procédé selon l'invention peut comprendre la caractéristique de la revendication 15.

L'invention sera mieux comprise à la lecture de la description qui va suivre, donnée uniquement à titre d'exemple, et faite en se référant aux dessins annexés, sur lesquels :
- la figure 1 est une vue schématique en coupe partielle d'une première installation d'exploitation de fluide à travers une étendue d'eau, mettant en oeuvre une ligne flexible munie d'un premier élément d'armure selon l'invention ;
- la figure 2 est une vue en perspective partiellement éclatée d'un premier exemple de ligne flexible selon l'invention ;
- la figure 3 est une vue d'une section transversale d'un premier exemple d'élément d'armure selon l'invention ;
- la figure 4 est un schéma synoptique fonctionnel illustrant différentes étapes d'un procédé de fabrication d'un élément d'armure selon l'invention ;
- la figure 5 est une vue analogue à la figure 3 d'une variante d'élément d'armure selon l'invention.

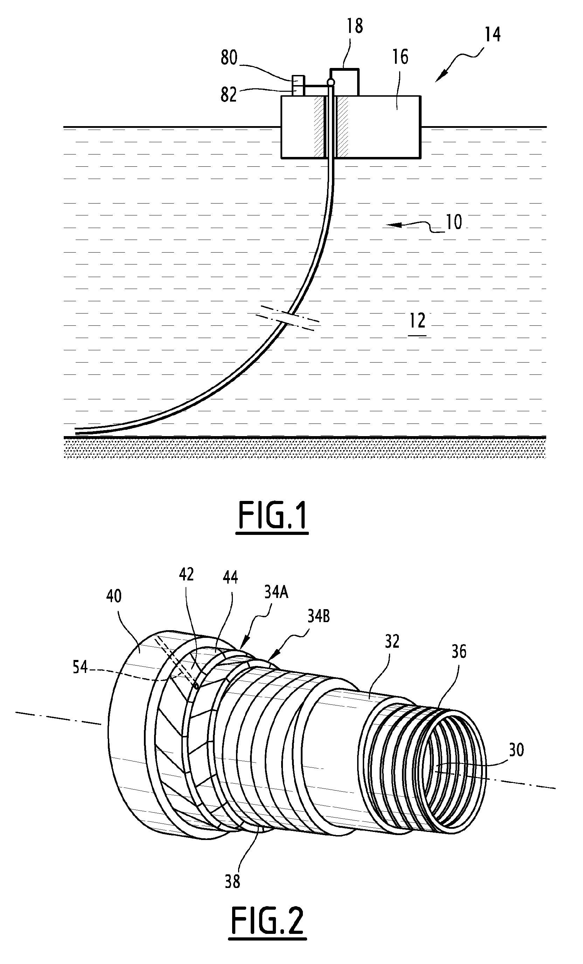

Une première ligne flexible 10 selon l'invention est illustrée par les figures 1 à 3.

La ligne flexible 10 est disposée à travers une étendue d'eau 12 dans une installation 14 d'exploitation de fluide, notamment d'hydrocarbures.

L'étendue d'eau 12 est par exemple un lac, une mer ou un océan. La profondeur de l'étendue d'eau 12 au droit de l'installation 14 est par exemple comprise entre 500 m et 3000 m.

L'installation 14 comporte un ensemble de surface 16 et un ensemble de fond (non représenté) qui sont avantageusement raccordés entre eux par la ligne flexible 10.

L'ensemble de surface 16 est par exemple flottant. Il est avantageusement formé par un support naval de surface, une plate-forme semi-submersible, une colonne verticale flottante ou un navire. En variante, l'ensemble de surface 16 est une structure rigide fixe de type « jacket » ou une structure oscillante assujettie au fond de la mer.

L'ensemble de surface 16 comporte au moins un connecteur 18 destiné à être raccordé à une extrémité aval de la ligne flexible 10.

Dans cet exemple, la ligne flexible 10 raccorde l'ensemble de fond (non représenté) à l'ensemble de surface 16. La ligne 10 est donc partiellement immergée dans l'étendue d'eau 12 et présente une extrémité supérieure disposée dans un volume d'air.

En variante, la ligne flexible 10 est totalement immergée dans l'étendue d'eau 12 et raccorde par exemple deux ensembles de fond (non représentés) entre eux.

La ligne flexible 10 comporte au moins un corps allongé et au moins un élément d'armure selon l'invention, enroulé autour du corps allongé.

Dans l'exemple représenté sur la figure 2, la première ligne flexible 10 est une conduite flexible destinée à transporter un fluide, notamment un hydrocarbure. Elle délimite ainsi un passage central 30 de circulation de fluide. Une telle conduite est par exemple décrite dans les documents normatifs publiés par l'American Petroleum Institute (API), API 17J et API RP17B.

Le corps allongé de la ligne flexible est constitué par une gaine interne 32. La ligne flexible comprend au moins une couche d'armure externe 34A, 34B disposée autour de la gaine interne 32.

Avantageusement et selon l'utilisation souhaitée, la ligne 10 comporte en outre une carcasse interne 36 disposée à l'intérieur de la gaine interne 32, une voûte de pression 38, intercalée entre la gaine interne 32 et la ou chaque couche d'armure 34A, 34B, et une gaine externe 40, destinée à la protection de la conduite.

La gaine interne 32 est destinée à confiner de manière étanche le fluide transporté dans le passage 30. Elle est formée en matière plastique, par exemple à base d'un polyoléfine, tel que du polyéthylène, à base d'un polyamide tel que du PA11 ou PA12, ou à base d'un polymère fluoré tel que du polyfluorure de vinylidène (PVDF).

L'épaisseur de la gaine interne 32 est par exemple comprise entre 5 millimètres et 20 millimètres.

La carcasse 36, lorsqu'elle est présente, est formée d'un feuillard métallique profilé, enroulé en spirale. Les spires du feuillard sont agrafées les unes aux autres, ce qui permet de reprendre les efforts radiaux d'écrasement.

Dans cette exemple, la carcasse 36 est disposée à l'intérieure de la gaine interne 32. La conduite est de type « rough bore ».

En variante, (non représentée) la conduite flexible est dépourvue de carcasse interne 36. Elle est alors désignée par le terme anglais « smooth bore ».

L'enroulement hélicoïdal du feuillard métallique profilé formant la carcasse 36 est à « pas court », c'est-à-dire qu'il présente un angle d'hélice de valeur absolue proche de 90°, typiquement comprise entre 75° et 90°.

Dans cet exemple, la voûte de pression 38 est destinée à reprendre les efforts liés à la pression régnant à l'intérieur de la gaine interne 32. Elle est par exemple formée d'un fil profilé métallique enroulé en hélice autour de la gaine. Le fil profilé présente généralement une géométrie complexe, notamment en forme de Z, de T, de U, de K, de X ou de I.

La voûte de pression 38 est généralement enroulée en hélice à pas court autour de la gaine interne 32.

La ligne flexible 10 selon l'invention comprend au moins une couche d'armure 34A, 34B, formé d'un enroulement hélicoïdal d'éléments d'armures allongés 42, 44.

Dans l'exemple représenté sur la figure 2, la ligne flexible 10 comporte une pluralité de couches d'armure 34A, 34B.

Chaque couche d'armure 34A, 34B comporte des éléments d'armures longitudinaux 42, 44 enroulés à pas long autour de l'axe A-A' de la conduite. Par « enroulé à pas long », on entend que la valeur absolue de l'angle d'hélice est inférieure à 60°, et est typiquement comprise entre 25° et 55°.

Les éléments d'armures 42, 44 d'une première couche d'armure 34A sont enroulés généralement suivant un angle opposé par rapport aux éléments d'armure 42, 44 d'une deuxième couche d'armure 34B. Ainsi, si l'angle d'enroulement des éléments 42, 44 de la couche 34A est égal à +α, α étant compris entre 25° et 55°, l'angle d'enroulement des éléments d'armure 42, 44 de la deuxième couche d'armure 34B disposé au contact de la première couche d'armure 34A, est par exemple de -α, avec α compris entre 25° et 55°.

Au moins une des couches d'armures 34A, 34B comprend un élément d'armure instrumenté 42 selon l'invention et avantageusement, au moins un élément d'armure 44 non instrumenté.

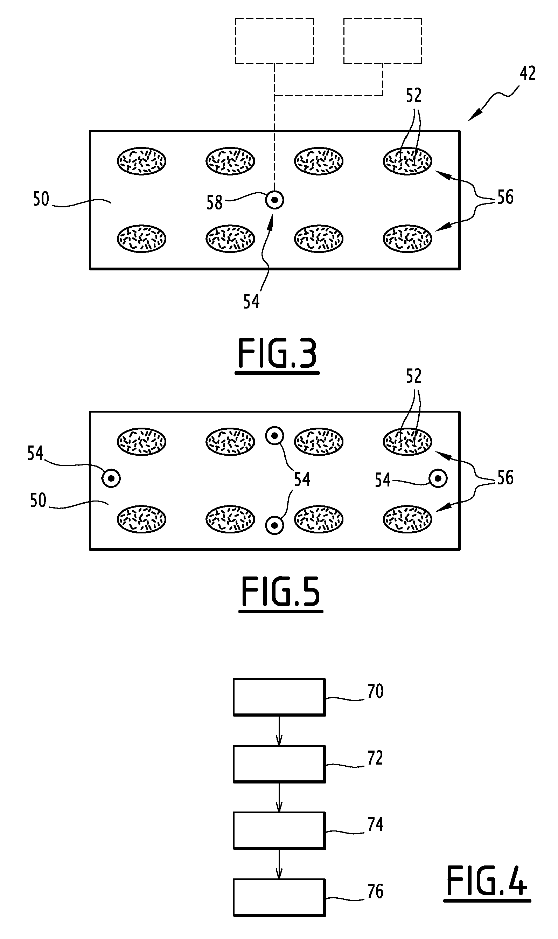

Un premier élément d'armure 42 instrumenté est illustré par la figure 3. Cet élément d'armure 42 comporte une matrice 50 en polymère, une pluralité de filaments 52 à base de fibres de carbone et, selon l'invention, au moins une fibre optique 54 noyée dans la matrice.

L'élément d'armure 42 est allongé. Il présente une longueur supérieure à ses autres dimensions, notamment à sa largeur et à son épaisseur.

La longueur de l'élément d'armure 42 est par exemple supérieure à 100 mètres et est notamment comprise entre 500 mètres et 5000 mètres.

La largeur maximale de l'élément d'armure 42, prise perpendiculairement à son axe est inférieure à 100 mm, et est notamment comprise entre 10 mm et 30 mm.

L'épaisseur maximale de l'élément d'armure 42 est inférieure à sa largeur, et est notamment inférieure à 10 mm. Cette épaisseur est par exemple comprise entre 0,8 mm et 3 mm.

Comme illustré par la figure 3, l'élément d'armure 42 présente une section transversale de contour extérieur polygonal, avantageusement rectangulaire. En variante, le contour extérieur de la section transversale est ovale ou circulaire.

La matrice 50 est formée à base d'une résine thermodurcissable, ou d'une résine thermoplastique.

La résine thermodurcissable est par exemple une résine époxy, une résine de type polyimide, telle qu'une résine bismaléimide, une résine polyuréthane ou polyisocyanurate, une résine aminoplaste, telle qu'une résine urée-formaldéhyde (UF), mélamine formaldéhyde (MF) ou phénol-formaldéhyde (PF), une résine polyester insaturé (UP), une résine vinylester (VE) ou un mélange de celles-ci.

Dans ce cas, le durcissement de la résine est effectué avantageusement par pultrusion, à une température inférieure à 280° C, notamment inférieure à 260°C, avantageusement comprise entre 200°C et 220°C.

La résine formant la matrice est réticulée, notamment en la maintenant à une température de traitement pendant une durée supérieure à 24 heures, notamment de l'ordre de 48 heures. La température de ce traitement thermique est supérieure à 200°C, et notamment compris entre 220°C et 250°C.

En variante, la résine est une résine thermoplastique, notamment choisie parmi les résines polyméthylméthacrylate (PMMA), polyacrylate, polyacrylonitrile (PAN), polyamide (PA ou Nylon), polyamide-imide (PAI), polyaryléthercétone (PAEK), polyoléfine, polycarbonate (PC), polycétone (PK), polyester, polyétheréthercétone (PEEK), polyéthercétonecétone (PEKK), polyétherimide (PEI), polyimide (PI), polystyrène (PS), polyéthersulfone (PES), polyphénylène sulphide (PPS), polysulfone (PSU), polymère fluoré thermoplastique tel que le polyfluorure de vinylidène (PVDF), le polytétrafluoroéthylène (PTFE), le polychlorotrifluoroéthylène (PCTFE), le polyéthylène chlorotrifluoroéthylène (PECTFE) ou le polyéthylène tétrafluoroéthylène (PETFE), ou un mélange de celles-ci.

Les filaments 52 sont généralement agencés sous forme de mèches 56 longitudinales comportant une pluralité de filaments 52 liés mécaniquement les uns aux autres par retordage, par groupage parallèle ou par filage d'un ensemble de fibres ou de filaments continus ou discontinus.

Au sens de l'invention, on entend plus généralement par « mèche » un ensemble ou groupe de fils continus retordus ou non retordus ensemble, chaque fil pouvant être un monofilament ou pouvant être un ensemble de fibres ou de filaments continus ou discontinus, assemblés notamment par retordage ou filage.

Le cas échéant, une mèche 56 peut être obtenue par un assemblage de plusieurs mèches élémentaires, par retordage ou simplement par un groupage parallèle de plusieurs mèches élémentaires.

Dans l'industrie des fibres de carbone, on utilise le terme anglais « tow » pour désigner des mèches constituées de fibres élémentaires. Le nombre de fibres élémentaires que comporte une mèche est généralement un multiple de 6000, les valeurs usuelles étant typiquement 6000, 12000, 18000, 24000, 30000, 36000, 42000, 48000, 56000 et 60000. Les mèches comportant au moins 48000 fibres sont désignées par le terme anglais « heavy tow ».

La mèche 56 comporte avantageusement entre 6000 et 60000 fibres élémentaires de carbone.

Le diamètre de chaque fibre de carbone est avantageusement compris entre 6 micromètres et 12 micromètres, typiquement de l'ordre de 8 micromètres. La dimension transversale maximale des mèches 56 est typiquement comprise entre 0.5 mm et 2 mm.

Les filaments 52, éventuellement sous forme de mèches 56, sont noyés dans la matrice 50.

Le ruban formé par la matrice 50 contenant les fibres 52 est par exemple de type ultra-dense. Ceci signifie que le taux de fibres 52, pris en volume par rapport au volume total des fibres 52 et de la matrice 50 dans l'élément d'armure 42 est supérieur à 50%, avantageusement supérieur ou égal à 60%, et de préférence supérieur ou égal à 70%.

Ainsi, l'élément d'armure 52 est particulièrement robuste. Il présente une résistance longitudinale à la rupture supérieure à 2000 MPa, et notamment supérieure à 2700 MPa, et une élongation à la rupture supérieure à 1,5% notamment supérieure à 1,6%, ces deux caractéristiques étant mesurées selon la norme ASTM D3039.

Comme illustré par la figure 3, l'élément d'armure 42 selon l'invention comporte au moins une fibre optique 54 reçue dans la matrice 50, avantageusement noyée dans la matrice.

La fibre optique 54 s'étend longitudinalement à travers l'élément d'armure 42.

Dans l'exemple représenté sur la figure 3, l'élément d'armure 42 comporte une fibre optique 54 disposée au voisinage de l'axe longitudinal de l'élément d'armure 42.

Dans la variante représentée à la figure 5, l'élément d'armure 42 comporte au moins deux fibres optiques 54 disposées respectivement le long des bords latéraux de l'élément 42, et avantageusement deux fibres optiques 54 disposées au voisinage d'une surface extérieure et d'une surface intérieure de l'élément d'armure 42.

La fibre optique 54 est avantageusement constituée exclusivement d'un coeur 58 formant un guide d'ondes lumineux. La fibre 54 est ainsi dépourvue de gaine extérieure.

Dans le cas où d'une part, le coeur de la fibre optique 54 présente un indice optique sensiblement constant dans toute sa section, et où d'autre part, la fibre optique 54 est dépourvue de gaine extérieure, la matrice 50 en contact avec le coeur de la fibre optique présente un indice optique inférieur à celui du coeur de la fibre optique. Une propagation guidée d'un rayonnement lumineux peut se produire le long d'une telle fibre optique.

En variante, la fibre optique 54 comporte un coeur 58 entouré par une gaine d'indice optique inférieur au coeur, de section transversale avantageusement homothétique à celle du coeur 58.

La fibre 54 est totalement noyée dans la matrice 50. Elle est entourée sur toute sa périphérie par le polymère formant la matrice 50. Elle présente, selon l'invention, un allongement à la rupture supérieur à 2% telle que mesuré par la norme ASTM D885-03.

Avantageusement, la fibre optique 54 présente un allongement à la rupture supérieur à 5%, notamment supérieur à 8%, et avantageusement compris entre 8% et 15%, mesurés par la norme précitée.

Le coeur 58 de la fibre optique présente un diamètre inférieur à 60 microns, notamment inférieur à 50 microns, par exemple compris entre 5 et 20 microns, et plus particulièrement compris entre 8 et 10 microns.

La fibre optique 54 est avantageusement plus transparente que la matrice en polymère 50, notamment pour des rayonnements lumineux dans le domaine du visible (longueur d'onde dans le vide comprise entre de 400 nanomètres à 800 nanomètres) et/ou dans le domaine de l'infrarouge (longueur d'onde dans le vide comprise entre 800 nanomètres et 1000000 nanomètres) et/ou dans le domaine du proche infrarouge (longueur d'onde dans le vide comprise entre 800 nanomètres et 1400 nanomètres) et/ou dans le domaine de l'ultraviolet (longueur d'onde dans le vide comprise entre 100 nanomètres et 400 nanomètres) et/ou dans le domaine des ultraviolets de type A (longueur d'onde dans le vide comprise entre 315 nanomètres et 400 nanomètres).

L'atténuation de la fibre optique 54 vis-à-vis d'un rayonnement présentant une longueur d'onde dans le vide égale à 1000 nanomètres (proche infrarouge) est avantageusement inférieure à 10 décibels par mètre (dB/m), plus avantageusement inférieure à 2 dB/m, encore plus avantageusement inférieure à 0,2 dB/m, et préférentiellement inférieure à 0,01 dB/m

En règle générale, il est avantageux de choisir une fibre optique 54 présentant une atténuation la plus faible possible, dans la mesure où la fibre présente par ailleurs des caractéristiques mécaniques suffisantes.

Dans un mode de réalisation, la fibre optique 54 est réalisée à base de silice, notamment de verre. Elle présente alors un allongement à la rupture compris entre 4% et 5%, tel que mesuré par les normes précitées.

Dans un autre mode de réalisation, la fibre optique 54 est une fibre optique polymère, désignée par l'acronyme anglais « POF».

Dans le cas d'une fibre optique 54 de ce type, l'allongement à la rupture est supérieur à 5 %, et est avantageusement supérieur à 10%, mesurées par la norme précitée.

La fibre 54 est par exemple réalisée à base d'un polymère méthacrylate, tel que du polyméthylméthacrylate (PMMA), à base d'un polymère styrénique tel que du polystyrène, à base d'un polymère polycarbonate, à base d'un polymère polyoléfine, tel que du méthylpentène, à base d'un polymère polyacrylonitrile, à base d'un polymère susceptible d'être obtenu par oxydation d'un polymère acrylonitrile ou à base d'un mélange de ceux-ci.

De préférence, la fibre 54 est réalisée à base d'un polymère polyméthylméthacrylate, d'un polymère polyacrylonitrile et/ou d'un polymère susceptible d'être obtenu par oxydation d'un polymère acrylonitrile.

Au sens de la présente demande, par « polymère polyacrylonitrile » (PAN), on entend un polymère comprenant au moins 70%, de préférence au moins 85% d'unités issues du monomère acrylonitrile (AN), les autres unités étant par exemple issues des monomères acrylate de méthyle (MA), méth(acrylate de méthyle) (MMA) et/ou acétate de vinyle (VA). Le polymère polyacrylonitrile peut donc être un homopolymère de polyacrylonitrile ou un copolymère de polyacrylonitrile.

Le polymère susceptible d'être obtenu par oxydation d'un polymère acrylonitrile est typiquement le polymère obtenu par chauffage d'un polymère polyacrylonitrile à une température supérieure à 100°C et notamment comprise entre 150°C et 250°C, de préférence pendant 2 heures à 48 heures. Ce traitement thermique conduit à une oxydation du polymère acrylonitrile en présence d'air ou d'oxygène.

Comme expliqué ci-après, le procédé de préparation de l'élément d'armure 42 comprenant au moins une fibre optique 54 peut comprendre une étape de pultrusion, et peut comprendre une étape 76 de traitement thermique à ces températures. Ainsi, l'exposition d'une fibre optique en polymère acrylonitrile à ces températures conduit typiquement à l'obtention d'une fibre optique en polymère susceptible d'être obtenu par oxydation d'un polymère acrylonitrile.

Le polymère polyacrylonitrile et le polymère susceptible d'être obtenu par oxydation d'un polymère acrylonitrile ayant des résistances à la température élevées (typiquement, ils résistent à des températures de 200 °C à 250°C), de bonnes propriétés de vieillissement et d'allongement, les fibres 54 à base de ces polymères sont particulièrement préférées. De plus, les fibres optiques en polymère polyacrylonitrile ou en polymère susceptible d'être obtenu par oxydation d'un polymère acrylonitrile ont généralement un diamètre plus faible que celles en polyméthylméthacrylate. En particulier, il est possible de préparer des fibres optiques à base de polymère polyacrylonitrile ou de polymère susceptible d'être obtenu par oxydation d'un polymère acrylonitrile ayant un diamètre inférieur à 60 µm, ce qui est généralement difficile à obtenir avec des fibres optiques à base d'un polymère polyméthylméthacrylate.

Dans ce cas, la fibre optique présente avantageusement une élongation à la rupture, telle que mesurée par la norme précitée, supérieure à 10%.

En outre, la fibre optique 54 ainsi obtenue présente une robustesse importante pour son diamètre. La gamme de diamètres de la fibre 54 est sensiblement analogue au diamètre des filaments 52 de fibres de carbones utilisées pour renforcer l'élément d'armure 42.

En outre, la nature chimique de la fibre optique 54, notamment lorsqu'elle est à base de PAN, résulte en une bonne adhérence et en une bonne cohésion avec la matrice 50.

Avantageusement, la fibre optique 54 s'étend sur toute la longueur de l'élément d'armature 42 ou plus généralement sur une longueur supérieure à au moins 10% de la longueur de l'armature 42. Au moins une région d'extrémité de la fibre optique dépasse hors de la matrice 50 pour permettre son raccordement.

Dans cet exemple, au moins un élément d'armure 44 est non instrumenté. L'élément d'armure 44 est par exemple formé d'une matrice 50 identique à celle de l'élément d'armature 42 et de filaments 52 identiques à ceux de l'élément d'armure 42, ces filaments 52 étant noyés dans la matrice 50.

En variante, l'élément allongé 42 est formé à base d'un fil métallique ou composite.

L'élément d'armure 44 non instrumenté est dépourvu de fibre optique.

Les éléments 42, 44 sont enroulés en hélice en étant adjacents les uns aux autres pour former la couche d'armure 34A, 34B.

La gaine externe 40 est destinée à empêcher la perméation de fluide depuis l'extérieur de la ligne flexible 10 vers l'intérieur. Elle est réalisée en polymère.

Dans l'exemple représenté sur la figure 2, la conduite flexible est avantageusement montée « non liée » (« unbonded » en anglais). En variante, la conduite est de type liée (« bonded » en anglais).

Un procédé de fabrication de l'élément d'armure 42 va maintenant être décrit, en regard de la figure 4.

Ce procédé comprend une étape 70 de fourniture de filaments 52 de fibres de carbone, et de fourniture d'au moins une fibre optique 54, une étape 72 de mise en forme des filaments 52 et de la fibre optique 54, puis une étape 74 de formation de la matrice 50.

Le procédé comporte ensuite une étape optionnelle 76 de traitement pour réticuler la matrice 50.

A l'étape 70, des bobines de filaments 52 de fibres de carbone sont fournies. Au moins une bobine de fibre optique 54 est également fournie en parallèle et est montée sur une machine de filage.

Puis, les fibres de carbone 52 et la fibre optique 54 sont déroulées à travers une filière destinée à recevoir le matériau précurseur de la matrice 50.

Lorsque la matrice 50 est réalisée par pultrusion, à partir d'un matériau thermodurcissable, le précurseur du matériau thermodurcissable est amené à travers la filière pour noyer les filaments 52 de fibres de carbone et la fibre optique 54.

Puis, le matériau précurseur est chauffé à une température supérieure à 40°C et notamment comprise entre 50°C et 200°C pour réaliser le durcissement de la résine.

A l'étape 76, le ruban ainsi obtenu est traité thermiquement, à une température supérieure à 150°C pour assurer une réticulation de la matrice en polymère 50.

L'élément d'armure 42 ainsi obtenu peut ensuite être enroulé autour du corps allongé formé dans cet exemple par la gaine interne 32, avec interposition éventuelle de la voûte de pression 38.

Une méthode de suivi de l'intégrité de la ligne flexible 10 selon l'invention va maintenant être décrite.

Initialement, la ligne flexible 10 est déployée à travers l'étendue d'eau 12. Puis, au moins une fibre optique 54 reçue dans un élément d'armure 42 est raccordée optiquement d'une part, à un appareil d'émission 80 d'un signal optique, pour permettre l'injection d'un signal optique dans la fibre optique 54, et d'autre part, à un appareil de réception 82 d'un signal optique ayant transité dans la fibre 54.

Avantageusement, l'appareil d'émission 80 et l'appareil de réception 82 sont raccordés à l'élément d'armure 42 au niveau d'une de ses extrémités, notamment sur l'ensemble de la surface 16.

Une boucle optique peut être réalisée pour déterminer le signal transmis à travers la boucle et le comparer au signal injecté.

En variante, la fibre optique 54 comprend des tronçons de type réseau de Bragg. Des réflexions partielles à différentes longueurs d'ondes peuvent être mesurées sur la fibre, ce qui permet d'effectuer entre autres de mesurer la température et/ou l'allongement de l'élément d'armure 42 au droit de chaque réseau de Bragg.

En variante, des mesures sont effectuées en utilisant une technique de réflectométrie dans le domaine temporel, désignée par le terme anglais « Optical Time Domain Reflectometer ». Ces mesures de réflectométrie peuvent notamment être faites sur les rayonnements rétrodiffusés de type Rayleigh, Raman et Brillouin. La réflectométrie Raman permet une mesure distribuée de la température le long de la fibre optique 54. La réflectométrie Brillouin permet une mesure distribuée de la contrainte axiale et de la température le long de la fibre optique 54.

Ainsi, il est possible de mesurer différentes propriétés concernant la ligne flexible 10, par exemple des mesures mécaniques de contrainte ou/et de déformation, des mesures de température, des mesures de fuite de liquide, des mesures d'usure, des mesures de déformation mécanique, des mesures de pression, des mesures de composition chimique du milieu ambiant, ou/et des mesures de pH du liquide en contact l'élément d'armure 42. Les mesures de composition chimique peuvent notamment être faites en équipant la fibre optique 54 d'un revêtement externe pouvant capter et/ou libérer certains composants chimiques par des mécanismes d'adsorption et de désorption, ces phénomènes ayant en outre une influence sur certaines propriétés optiques de la fibre.

Grâce à l'invention qui vient d'être décrite, il est possible de disposer d'un élément d'armure 42 de structure extrêmement robuste pour renforcer une ligne flexible et qui permet néanmoins de mesurer, au cours de l'utilisation de la ligne flexible, des propriétés relatives à cette ligne.

La présence d'une fibre optique 54 noyée au sein de l'élément d'armure 42 garantit que la mesure est représentative des phénomènes physiques présents sur la ligne flexible 10. La présence d'une fibre optique 54 présentant une élongation à la rupture supérieure à 2 % donne la possibilité d'effectuer des mesures appropriées au moyen de la fibre d'optique.

En outre, dans le cas des fibres optiques présentant une résistance à la rupture supérieure à 5%, notamment lorsque les fibres optiques sont des fibres optiques plastiques, la mesure peut être effectuée pour des gammes d'utilisations de la ligne flexible 10 beaucoup plus larges.

En outre, la comptabilité chimique de la fibre optique 54 plastique avec la matrice 50, notamment lorsqu'elle est faite à base de polyacrylonitrile, sa grande résistance chimique, sa robustesse et son faible diamètre compatible avec l'utilisation en tant que fibre optique garantit une élaboration simple de l'élément d'armure 42 et un fonctionnement adéquat sur une longue période de temps.

## Revendications

1. Elément d'armure (42) pour une ligne flexible (10) destinée à être placée dans une étendue d'eau (12), comprenant :
- une pluralité de filaments longitudinaux (52) de fibres de carbone ;
- une matrice (50) en polymère recevant les filaments (52) pour les lier entre eux, la matrice (50) formant un ruban destiné à être enroulé autour d'un corps longitudinal (32) de la ligne flexible (10) ;
**caractérisé en ce que** l'élément d'armure (42) comporte au moins une fibre optique (54) reçue dans la matrice (50), la fibre optique (54) présentant un allongement à la rupture supérieur à 2%, tel que mesuré par la norme ASTM-D 885-03.

2. Elément (42) selon la revendication 1, **caractérisé en ce que** l'allongement à la rupture de la fibre optique (54), mesuré par la norme ASTM-D 885-03, est supérieur à 5%, avantageusement supérieur à 8%.

3. Elément (42) selon l'une quelconque des revendications 1 ou 2, **caractérisé en ce que** la fibre optique (54) est une fibre optique polymère.

4. Elément (42) selon la revendication 3, **caractérisé en ce que** la fibre optique (54) est réalisée à partir d'un polymère méthacrylate, tel que du polyméthylméthacrylate (PMMA), à base d'un polymère styrénique tel que du polystyrène, à base d'un polymère polycarbonate, à base d'un polymère polyoléfine, tel que du méthylpentène, à base d'un polymère polyacrylonitrile, à base d'un polymère susceptible d'être obtenu par oxydation d'un polymère acrylonitrile ou à base d'un mélange de ceux-ci.

5. Elément (42) selon la revendication 4, **caractérisé en ce que** la fibre optique (54) est réalisée à partir d'un polymère polyméthylméthacrylate, d'un polymère polyacrylonitrile et/ou d'un polymère susceptible d'être obtenu par oxydation d'un polymère acrylonitrile.

6. Elément (42) selon la revendication 5, **caractérisé en ce que** la fibre optique (54) est à base d'un polymère polyacrylonitrile ou d'un polymère susceptible d'être obtenu par oxydation d'un polymère acrylonitrile.

7. Elément (42) selon l'une quelconque des revendications précédentes, **caractérisé en ce que** la fibre optique (54) est totalement noyée dans la matrice.

8. Elément (42) selon l'une quelconque des revendications précédentes, **caractérisé en ce que** la matrice (50) est réalisée à base d'une résine thermoplastique notamment choisie parmi les résines polyméthylméthacrylate (PMMA), polyacrylate, polyacrylonitrile (PAN), polyamide (PA ou Nylon), polyamide-imide (PAI), polyaryléthercétone (PAEK), polyoléfine, polycarbonate (PC), polycétone (PK), polyester, polyétheréthercétone (PEEK), polyéthercétonecétone (PEKK), polyétherimide (PEI), polyimide (PI), polystyrène (PS), polyéthersulfone (PES), polyphénylène sulphide (PPS), polysulfone (PSU), polymère fluoré thermoplastique tel que le polyfluorure de vinylidène (PVDF), le polytétrafluoroéthylène (PTFE), le polychlorotrifluoroéthylène (PCTFE), le polyéthylène chlorotrifluoroéthylène (PECTFE) ou le polyéthylène tétrafluoroéthylène (PETFE), ou un mélange de celles-ci.

9. Elément (42) selon l'une quelconque des revendications précédentes, **caractérisé en ce que** le diamètre de la fibre optique (54) est inférieur à 50 micromètres.

10. Ligne flexible (10) destinée à être placée dans une étendue d'eau (12), **caractérisée en ce qu'**elle comporte :
- un corps longitudinal (32) ;
- au moins un élément d'armure (42) selon l'une quelconque des revendications précédentes, enroulé dans le corps (32) ou enroulé autour du corps (32).

11. Ligne (10) selon la revendication 10, **caractérisée en ce que** le corps longitudinal (32) est une gaine interne délimitant un passage (30) de circulation d'un fluide, l'élément d'armure (42) étant enroulé autour de la gaine interne à l'extérieur de la gaine interne.

12. Ligne selon la revendication 11, **caractérisée en ce que** le corps longitudinal (32) est une enveloppe de retenue contenant au moins un tube de transport de fluide, et/ou au moins un lien fonctionnel destiné à convoyer une information, un signal électrique et/ou optique, et/ou une puissance électrique, l'élément d'armure (42) étant enroulé autour du corps (32).

13. Méthode de contrôle des propriétés d'une ligne flexible (10) selon l'une quelconque des revendications 11 à 12, **caractérisée en ce qu'**elle comporte les étapes suivantes :
- raccordement de la fibre optique (54) présente dans l'élément d'armure (42) à un appareil d'émission (80) d'un signal optique (54) destiné à être injecté dans la fibre optique (54) et à un appareil de mesure (82) d'un signal optique ayant transité à travers la fibre ;
- injection d'un signal optique par l'appareil d'émission (80) du signal optique ;
- circulation du signal optique à travers la fibre optique (54) présente dans l'élément d'armure (42) ;
- mesure d'un signal optique ayant transité dans la fibre optique (54) par l'appareil de mesure (82).

14. Procédé de fabrication d'un élément d'armure (42) selon l'une quelconque des revendications 1 à 9, **caractérisé en ce qu'**il comporte les étapes suivantes :
- fourniture d'une pluralité de filaments longitudinaux (52) en fibre de carbone ;
- formation d'une matrice (50) en polymère recevant les filaments (52), pour lier les filaments (52) entre eux, la matrice (50) formant un ruban destiné à être enroulé autour d'un corps longitudinal (32) de la ligne flexible (10) ;
**caractérisé en ce que** le procédé comporte une étape de disposition d'au moins une fibre optique (54) dans la matrice (50), la fibre optique (54) présentant un allongement à la rupture supérieur à 2%, tel que mesuré par la norme ASTM-D 885-03.

15. Procédé selon la revendication 14, **caractérisé en ce que** la matrice (50) est formée par pultrusion ou par extrusion d'un polymère.

## Patentansprüche

1. Element zur Bewehrung (42) für eine flexible Leitung (10), welche dazu vorgesehen ist, in einem Gewässer (12) platziert zu sein, aufweisend:
- eine Mehrzahl von längsverlaufenden Fäden (52) aus Kohlefaser,
- eine Matrix (50) aus Polymer, welche die Fäden (52) aufnimmt, um sie miteinander zu verbinden, wobei die Matrix (50) ein Band bildet, welches dazu vorgesehen ist, um einen Längskörper (32) der flexiblen Leitung (10) herum gewickelt zu sein,
**dadurch gekennzeichnet, dass** das Element zur Bewehrung (42) wenigstens eine optische Faser (54) aufweist, welche in der Matrix (50) aufgenommen ist, wobei die optische Faser (54) gemessen gemäß der Norm ASTM-D 885-03 eine Bruchdehnung größer 2% aufweist.

2. Element (42) gemäß Anspruch 1, **dadurch gekennzeichnet, dass** die Bruchdehnung der optischen Faser (54) gemessen gemäß der Norm ASTM-D 885-03 größer als 5%, vorteilhafterweise größer als 8%, ist.

3. Element (42) gemäß irgendeinem der Ansprüche 1 oder 2, **dadurch gekennzeichnet, dass** die optische Faser (54) eine optische Polymerfaser ist.

4. Element (42) gemäß Anspruch 3, **dadurch gekennzeichnet, dass** die optische Faser (54) aus einem Methacrylat-Polymer, wie zum Beispiel aus Polymethylmethacrylat (PMMA), auf Grundlage eines Styrol-Polymers, wie zum Beispiel aus Polystyrol, auf Grundlage eines Polycarbonat-Polymers, auf Grundlage eines Polyolefin-Polymers, wie zum Beispiel aus Methylpenten, auf Grundlage eines Polyacrylnitril-Polymers, auf Grundlage eines Polymers, welches durch eine Oxidation eines Acrylnitril-Polymers erhältlich ist, oder auf Grundlage einer Mischung davon hergestellt ist.

5. Element (42) gemäß Anspruch 4, **dadurch gekennzeichnet, dass** die optische Faser (54) aus einem Methacrylat-Polymer, einem Polyacrylnitril-Polymer und/oder einem Polymer, welches durch eine Oxidation eines Acrylnitril-Polymers erhältlich ist, hergestellt ist.

6. Element (42) gemäß Anspruch 5, **dadurch gekennzeichnet, dass** die optische Faser (54) auf einem Polyacrylnitril-Polymer oder einem Polymer, welches durch eine Oxidation eines Acrylnitril-Polymers erhältlich ist, basiert.

7. Element (42) gemäß irgendeinem der vorhergehenden Ansprüche, **dadurch gekennzeichnet, dass** die optische Faser (54) vollständig in der Matrix eingebettet ist.

8. Element (42) gemäß irgendeinem der vorhergehenden Ansprüche, **dadurch gekennzeichnet, dass** die Matrix (50) auf Grundlage eines thermoplastischen Harzes hergestellt ist, welches insbesondere aus den Harzen aus Polymethylmethacrylat (PMMA), Polyacrylat, Polyacrylnitril (PAN), Polyamid (PA oder Nylon), Polyamidimid (PAI), Polyaryletherketon (PAEK), Polyoelfin, Polycarbonat (PC), Polyketon (PK), Polyester, Polyetheretherketon (PEEK), Polyetherketonketon (PEKK), Polyetherimid (PEI), Polyimid (PI), Polystyrol (PS), Polyethersulfon (PES), Polyphenylensulfid (PPS), Polysulfon (PSU), thermoplastischem Fluorpolymer, wie zum Beispiel das Polyvinylidenfluorid (PVDF), das Polytetrafluorethylen (PTFE), das Polychlortrifluorethylen (PCTFE), das Polyethylenchlortrifluorethylen (PECTFE) oder das Polyethylentetrafluorethylen (PETFE), oder einer Mischung davon ausgewählt ist.

9. Element (42) gemäß irgendeinem der vorhergehenden Ansprüche, **dadurch gekennzeichnet, dass** der Durchmesser der optischen Faser (54) kleiner als 50 Mikrometer ist.

10. Flexible Leitung (10), welche dazu vorgesehen ist, in einem Gewässer (12) platziert zu sein, **dadurch gekennzeichnet, dass** sie aufweist:
- einen Längskörper (32),
- wenigstens ein Element zur Bewehrung (42) gemäß irgendeinem der vorhergehenden Ansprüche, welches in dem Längskörper (32) gewickelt oder um den Körper (32) herum gewickelt ist.

11. Leitung (10) gemäß Anspruch 10, **dadurch gekennzeichnet, dass** der Längskörper (32) ein Innenrohr ist, welches einen Kanal (30) zur Zirkulation eines Fluids begrenzt, wobei das Element zur Bewehrung (42) außerhalb des Innenrohrs um das Innenrohr herum gewickelt ist.

12. Leitung (12) gemäß Anspruch 11, **dadurch gekennzeichnet, dass** der Längskörper (32) eine Zurückhaltungshülle ist, welche wenigstens ein Rohr zum Transport von Fluid und/oder wenigstens eine funktionelle Verbindung aufweist, welche dazu vorgesehen ist, eine Information, ein elektrisches und/oder optisches Signal und/oder eine elektrische Leistung zu transportieren, wobei das Element zur Bewehrung (42) um den Körper (32) herum gewickelt ist.

13. Verfahren zur Kontrolle der Eigenschaften einer flexiblen Leitung (10) gemäß irgendeinem der Ansprüche 11 bis 12, **dadurch gekennzeichnet, dass** es die folgenden Schritte aufweist:
- Anschließen der optischen Faser (54), welche in dem Element zur Bewehrung (42) vorliegt, an eine Vorrichtung zum Aussenden (80) eines optischen Signals (54), welches dazu vorgesehen ist, in die optische Faser (54) eingebracht zu werden, und an eine Vorrichtung zum Messen (82) eines optischen Signals, welches durch die Faser hindurch gelaufen ist,
- Einbringen eines optischen Signals mittels der Vorrichtung zum Aussenden (80) des optischen Signals,
- Zirkulation des optischen Signals durch die optische Faser (54), welche in dem Element zur Bewehrung (42) vorliegt,
- Messen eines optischen Signals, welches in der optischen Faser (54) gelaufen ist, durch die Vorrichtung zum Messen (82).

14. Verfahren zum Herstellen eines Elements zur Bewehrung (42) gemäß irgendeinem der Ansprüche 1 bis 9, **dadurch gekennzeichnet, dass** es die folgenden Schritte aufweist:
- Bereitstellen einer Mehrzahl von längsverlaufenden Fasern (52) aus Kohlefaser,
- Ausbilden einer Matrix (50) aus Polymer, welche die Fasern (52) aufnimmt, um die Fasern (52) miteinander zu verbinden, wobei die Matrix (50) ein Band ausbildet, welches dazu vorgesehen ist, um einen Längskörper (32) der flexiblen Leitung (10) herum gewickelt zu sein,
**dadurch gekennzeichnet, dass** das Verfahren einen Schritt des Anordnens von wenigstens einer optischen Faser (54) in der Matrix (50) aufweist, wobei die optische Faser (54) gemessen gemäß der Norm ASTM-D 885-03 eine Bruchdehnung größer 2% aufweist.

15. Verfahren gemäß Anspruch 14, **dadurch gekennzeichnet, dass** die Matrix (50) durch Pultrudieren oder durch Extrudieren eines Polymers ausgebildet wird.

## Claims

1. A armor element (42) for a flexible line (10) intended to be placed in an expanse of water (12), comprising:
- a plurality of longitudinal carbon fiber filaments (52);
- a polymeric matrix (50) receiving the filaments (52) for binding them together, the matrix (50) forming a ribbon intended to be wound around a longitudinal body (32) of the flexible line (10);
**characterized in that** the armor element (42) includes at least one optical fiber (54) received in the matrix (50), the optical fiber (54) having an elongation at break of more than 2%, as measured with the ASTM-D 885-03 standard.

2. The element (42) according to claim 1, **characterized in that** the elongation at break of the optical fiber (54), as measured with the ASTM-D 885-03 standard, is greater than 5%, advantageously greater than 8%.

3. The element (42) according to any of claims 1 or 2, **characterized in that** the optical fiber (54) is a polymeric optical fiber.

4. The element (42) according to claim 3, **characterized in that** the optical fiber (54) is made based on a methacrylate polymer, such as polymethylmethacrylate (PMMA), based on a styrene polymer such as polystyrene, based on a polycarbonate polymer, based on a polyolefin polymer, such as methylpentene, based on a polyacrylonitrile polymer, based on a polymer which may be obtained by oxidation of an acrylonitrile polymer or based on a mixture thereof.

5. The element (42) according to claim 4, **characterized in that** the optical fiber (54) is made from a polymethylmethacrylate polymer, a polyacrylonitrile polymer and/or a polymer which may be obtained by oxidation of an acrylonitrile polymer.

6. The element (42) according to claim 5, **characterized in that** the optical fiber (54) is based on a polyacrylonitrile polymer or a polymer which may be obtained by oxidation of an acrylonitrile polymer.

7. The element (42) according to any of the preceding claims, **characterized in that** the optical fiber (54) is totally embedded in the matrix.

8. The element (42) according to any of the preceding claims, **characterized in that** the matrix (50) is made on the basis of a thermoplastic resin, notably selected from polymethylmethacrylate (PMMA), polyacrylate, polyacrylonitrile (PAN), polyamide (PA or Nylon), polyamide-imide (PAI), polyaryletherketone (PAEK), polyolefin, polycarbonate (PC), polyketone (PK), polyester, polyetheretherketone (PEEK), polyetherketoneketone (PEKK), polyetherimide (PEI), polyimide (PI), polystyrene (PS), polyethersulfone (PES), polyphenylene sulphide (PPS), polysulfone (PSU), a thermoplastic fluorinated polymer such as polyvinylidene fluoride (PVDF), polytetrafluoroethylene (PTFE), polychlorotrifluoroethylene (PCTFE), polyethylene chlorotrifluoroethylene (PECTFE) or polyethylene tetrafluoroethylene (PETFE), or a mixture thereof.

9. The element (42) according to any of the preceding claims, **characterized in that** the diameter of the optical fiber (54) is less than 50 micrometers.

10. A flexible line (10) intended to be placed in an expanse of water (12), **characterized in that** it includes:
- a longitudinal body (32) ;
- at least one armor element (42) according to any of the preceding claims, wound in the body (32) or wound around the body (32).

11. The line (10) according to claim 10, **characterized in that** the longitudinal body (32) is an internal sheath delimiting a passage (30) for circulation of a fluid, the armor element (42) being wound around the internal sheath on the outside of the internal sheath.

12. The line according to claim 11, **characterized in that** the longitudinal body (32) is a retention cover containing at least one fluid transport tube, and/or at least one functional link intended for conveying a piece of information, an electric and/or optical signal, and/or an electric power, the armor element (42) being wound around the body (32).

13. A method for controlling properties of a flexible line (10) according to any of claims 11 to 12, **characterized in that** it includes the following steps:
- connecting the optical fiber (54) present in the armor element (42) to an apparatus (80) for emitting an optical signal (54) intended to be injected into the optical fiber (54) and to an apparatus (82) for measuring an optical signal having passed in transit through the fiber;
- injecting an optical signal with the apparatus (80) for emitting the optical signal;
- circulating the optical signal through the optical fiber (54) present in the armor element (42);
- measuring an optical signal having passed in transit through the optical fiber (54) with the measurement apparatus (82).

14. A method for manufacturing a armor element (42) according to any of claims 1 to 9, **characterized in that** it includes the following steps:
- providing a plurality of longitudinal carbon fiber filaments (52);
- forming a polymeric matrix (50) receiving the filaments (52), in order to bind the filaments (52) together, the matrix (50) forming a ribbon intended to be wound around a longitudinal body (32) of the flexible line (10);
**characterized in that** the method includes a step for positioning at least one optical fiber (54) in the matrix (50), the optical fiber (54) having an elongation at break of more than 2%, as measured with the ASTM-D 885-03 standard.

15. The method according to claim 14, **characterized in that** the matrix (50) is formed by pultrusion or by extrusion of a polymer.
